# EUROPÄISCHE PATENTSCHRIFT

(11) **EP 3 005 008 B1**
(45) Veröffentlichungstag und Bekanntmachung des Hinweises auf die Patenterteilung: **12.06.2019**
(21) Anmeldenummer: 14716520.3
(22) Anmeldetag: 08.04.2014
(51) Int. Cl.: G05D 16/20

(54) **PROPORTIONAL-DRUCKREGELVENTIL**
PROPORTIONAL PRESSURE-REGULATING VALVE
SOUPAPE DE REGULATION DE PRESSION PROPORTIONNELLE

(30) Priorität: 24.05.2013 DE 102013008840
(43) Veröffentlichungstag der Anmeldung: 13.04.2016
(73) Patentinhaber: Hydac Fluidtechnik GmbH, 66280 Sulzbach/Saar (DE)
(72) Erfinder: GRILL, Martin, 66606 St. Wendel (DE); BRUCK, Peter, 66484 Althornbach (DE)
(74) Vertreter: Bartels und Partner, Patentanwälte
(86) Internationale Anmeldenummer: PCT/EP2014/000929
(87) Internationale Veröffentlichungsnummer: WO 2014/187519

(56) Entgegenhaltungen:
- DE-A1- 19 949 756
- DE-B3-102009 006 445
- US-A1- 2003 070 715

## Beschreibung

Die Erfindung betrifft ein Proportional-Druckregelventil zur Ansteuerung einer ersten Fluidverbindung von einem Arbeitsanschluss zu einem Tankanschluss und einer zweiten Fluidverbindung von einem Versorgungsanschluss zum Arbeitsanschluss mit den Merkmalen im Oberbegriff von Anspruch 1.

Proportional-Druckregelventile finden Anwendung beispielsweise in mobilen Arbeitsmaschinen zur elektrohydraulischen Ansteuerung von Kupplungen. Diese Kupplungen werden bei ihrer Betätigung bzw. beim Anschalten zunächst mit Fluiddruck beaufschlagt, bis die jeweilige Kupplungsscheibe die jeweils zugeordnete Anlauffläche erreicht bzw. berührt. Der zum Überwinden der Federkräfte erforderliche Kupplungsdruck nimmt vergleichsweise kleine Werte unterhalb von 2 bar an. Eine weitere Erhöhung des Kupplungsdrucks führt zu derartigen Kräften an den Kupplungsscheiben bzw. Kupplungsbelägen, welche eine Drehmomentübertragung dann mittels Reibung ermöglichen.

Bei direkt gesteuerten Proportional-Druckregelventilen wird durch den Einsatz von Magneten mit großen Arbeitshüben ein möglichst großer Strömungsquerschnitt als Öffnungsquerschnitt für die jeweilige Fluidverbindung geöffnet bzw. freigegeben. Würde man diese großen und vergleichsweise kostenintensiven Magnete durch kleinere preisgünstigere Magnete als Betätigungseinrichtungen mit gleicher Kraft einsetzen, müsste der lineare Kraft-Hubbereich entsprechend verkürzt werden. Andernfalls hätte dies unweigerlich zur Folge, dass beim Betätigen der Betätigungseinrichtung, wie dem Bestromen eines Elektromagneten, zur Freigabe der zweiten Fluidverbindung vom Versorgungsanschluss zum Arbeitsanschluss zunächst eine große Feder- bzw. Rückstellkraft überwunden werden müsste und beim Überschreiten der Feder- bzw. Rückstellkraft durch die Magnetkraft in einer Art "Anfahrsprung" die lineare P-I-Kennlinie des Proportional-Druckregelventils erreicht werden würde. Dies könnte zu einem "ruckartigen", verzögerten Anfahren der Arbeitsmaschine führen, was im mobilen Einsatz der Arbeitsmaschine nicht erwünscht ist.

Die US 2003/0070715 A1 beschreibt ein Proportional-Druckregelventil zur Ansteuerung einer ersten Fluidverbindung von einem Arbeitsanschluss zu einem Tankanschluss und einer zweiten Fluidverbindung von einem Versorgungsanschluss zum Arbeitsanschluss, umfassend ein Ventilgehäuse mit dem Arbeitsanschluss, dem Tankanschluss und dem Versorgungsanschluss; einen im Ventilgehäuse verfahrbar geführten Regelkolben, welcher in mindestens einer ersten Stellung die erste Fluidverbindung vom Arbeitsanschluss zum Tankanschluss freigibt und die zweite Fluidverbindung vom Versorgungsanschluss zum Arbeitsanschluss sperrt, und welcher in mindestens einer zweiten Stellung die erste Fluidverbindung sperrt und die zweite Fluidverbindung freigibt; eine den Regelkolben in Richtung der jeweils ersten Stellung haltende Rückstelleinrichtung; und eine den Regelkolben gegen die Rückstellkraft der Rückstelleinrichtung in Richtung der jeweils zweiten Stellung verfahrende Betätigungseinrichtung, wobei der Regelkolben bei Freigabe der ersten Fluidverbindung durch den beim Durchströmen von Fluid entstehenden Gesamt-Differenzdruck aus der jeweils ersten Stellung in mindestens eine dritte Stellung verfahrbar ist und wobei in der jeweils dritten Stellung des Regelkolbens die erste Fluidverbindung mit vergrößertem Öffnungsquerschnitt gegenüber der jeweils ersten Stellung freigegeben und die zweite Fluidverbindung weiter gesperrt bleibt, wobei die Rückstelleinrichtung über ein Zwischenelement am Regelkolben angreift. Das Zwischenelement in Form einer Ringscheibe liegt sowohl in der ersten Stellung als auch in der dritten Stellung am Regelkolben an.

Weitere Proportional-Druckregelventile gehen aus der DE 10 2009 006 445 B3 und der DE 199 49 756 A1 hervor.

Die Erfindung stellt sich daher die Aufgabe, die Funktion eines Proportional-Druckregelventils zur elektrohydraulischen Ansteuerung einer Kupplung dahingehend zu verbessern, dass Magnete mit einem verkürzten linearen Kraft-Hubbereich einsetzbar und ein unregelmäßiges, insbesondere sprungartiges, Anfahrverhalten vermeidbar sind.

Diese Aufgabe wird gelöst durch ein Proportional-Druckregelventil mit den Merkmalen des Patentanspruches 1 in seiner Gesamtheit.

Ein erfindungsgemäßes Proportional-Druckregelventil zeichnet sich dadurch aus, dass der Regelkolben in einer dritten Stellung vom Zwischenelement beabstandet ist.

Es ist ferner vorgesehen, dass der Regelkolben bei Freigabe der ersten Fluidverbindung durch den am Regelkolben anstehenden Gesamt-Differenzdruck aus der jeweils ersten Stellung in mindestens eine weitere dritte Stellung verfahrbar ist, und dass in dieser jeweils dritten Stellung des Regelkolbens die erste Fluidverbindung mit vergrößertem Öffnungsquerschnitt gegenüber der jeweils ersten Stellung freigegeben und die zweite Fluidverbindung weiter gesperrt bleibt. Erfindungsgemäß ist eine einen Fluidablauf zum Tankanschluss bzw. die erste Fluidverbindung vergrößernde, jeweilige dritte Stellung des Regelkolbens dadurch erreichbar, dass der beim An- bzw. Durchströmen des Proportional-Druckregelventils, genauer des Regelkolbens, vom Arbeitsanschluss zum Tankanschluss entstehende Differenzdruck zur Bewegung des Regelkolbens mit genutzt wird. Durch die jeweilige dritte Stellung ist bei einem erfindungsgemäßen Proportional-Druckregelventil eine Art Schnellentladefunktion für einen an den Arbeitsanschluss angeschlossenen hydraulischen Verbraucher, wie eine Kupplung, realisiert.

Zweckmäßigerweise greift der Differenzdruck an einer Kolbenfläche des Regelkolbens an, die rückwärtig angeordnet, dem Betätigungsmagneten zugewandt ist. Die Bewegung des Regelkolbens von einer ersten in eine jeweilige dritte Stellung erfolgt somit durch eine von der Rückstelleinrichtung aufgebrachte Rückstellkraft, unter Einbezug des am Regelkolben anstehenden Fluid-Differenzdruckes.

In einer bevorzugten Ausführungsform des erfindungsgemäßen Proportional-Druckregelventils ist der Regelkolben hohlkörperartig, vorzugsweise rohrzylinderförmig, mit einem Innenraum ausgebildet und weist Fluiddurchlässe für die jeweilige durch den Innenraum führende Fluidverbindung auf, wobei im Ventilgehäuse jeweils mindestens ein dem jeweiligen Anschluss zugeordneter Durchlass ausgebildet ist, und wobei die dem Versorgungsanschluss und dem Tankanschluss jeweils zugeordneten Durchlässe in Abhängigkeit von der Lage des Regelkolbens im Ventilgehäuse durch die entsprechenden Fluiddurchlässe hindurch abhängig von der jeweiligen Regelstellung des Regelkolbens fluidführend mit dem Innenraum verbunden oder fluiddicht von diesem getrennt sind.

In üblicher Bauweise sind die Fluiddurchlässe, die dem Versorgungsanschluss und dem Tankanschluss zugeordnet sind, in einem Längenabschnitt des Regelkolbens bevorzugt regelmäßig ausgebildet und angeordnet. In der jeweils ersten Stellung des Regelkolbens sind die Fluiddurchlässe derart in Bezug zum Ventilgehäuse angeordnet, dass die erste Fluidverbindung vom Arbeitsanschluss durch den Innenraum, die zuordenbaren Fluiddurchlässe und den zuordenbaren Durchlass im Ventilgehäuse hindurch zum Tankanschluss freigegeben ist. In mindestens einer der ersten Stellungen des Regelkolbens ist somit der mindestens eine dem Versorgungsanschluss zugeordnete Durchlass im Ventilgehäuse fluiddicht vom Innenraum des Regelkolbens getrennt und somit die zweite Fluidverbindung zur Druckversorgung gesperrt. In entsprechender Weise ist in mindestens einer der zweiten Stellungen des Regelkolbens die erste Fluidverbindung zum Tank gesperrt und die zweite Fluidverbindung zur Druckversorgung freigegeben.

Der dem Arbeitsanschluss zugeordnete Fluiddurchlass im Regelkolben und der entsprechende Durchlass im Ventilgehäuse sind vorteilhafterweise an einer Unterseite des Proportional-Druckregelventils angeordnet. In dieser Ausgestaltung ergibt sich der Vorteil einer besonders kompakten Bauweise des Proportional-Druckregelventils, wobei die Betätigungseinrichtung zweckmäßigerweise an einer dem Arbeitsanschluss gegenüberliegenden Oberseite des Proportional-Druckregelventils angeordnet ist.

Bei einer Betätigung der Betätigungseinrichtung des Proportional-Druckregelventils, beispielsweise durch Bestromen eines Elektromagneten wird der Regelkolben aus der jeweils ersten Stellung in eine jeweils zweite Stellung verfahren. Beim Abschalten der Betätigungseinrichtung wiederum wird der Regelkolben unter anderem durch die von der Rückstelleinrichtung aufgebrachte Rückstellkraft zurück in die jeweils erste Stellung verfahren. Die Rückstelleinrichtung kann ein Federelement, insbesondere eine den Regelkolben umgreifende Druckfeder, sein. Die Betätigungseinrichtung umfasst beispielsweise einen Elektromagneten mit einem linearen Kraft-Hubbereich. Ferner greift an dem Regelkolben, abhängig von dem an ihm anstehenden Fluiddruck, ein Differenzdruck an, der sich durch die unterschiedliche Flächenausbildung am gestuften Regelkolben ergibt. So ist am Außenumfang des gestuften Regelkolbens eine kreisringförmige Differenzdruckfläche vorgesehen, deren Druckwirksamkeit sich aus der Differenz des größten Außenumfanges des Regelkolbens im Bereich des Arbeitsanschlusses zu einem mittleren Außenumfang im rückwärtigen Bereich des Regelkolbens ergibt, der der Betätigungseinrichtung zugewandt ist, wobei die Differenzdruckfläche zwischen diesen genannten Außendurchmessern, die entsprechende Flächeninhalte begrenzen als weitere Stufe des Regelkolbens realisiert ist.

Wird der Regelkolben erfindungsgemäß in eine seiner dritten Stellungen verfahren, wird der Öffnungsquerschnitt für die erste Fluidverbindung größer als in dessen jeweils ersten Stellung. Hieraus ergibt sich der Vorteil, dass beim Abschalten, anders ausgedrückt bei Beendigung der Betätigung der Betätigungseinrichtung, der Fluiddruck durch die bedarfsgerecht eingenommene jeweilige dritte Stellung und den auf diese Weise vergrößerten Öffnungsquerschnitt in einer Art Schnellentladefunktion des erfindungsgemäßen Proportional-Druckregelventils zurück vom Arbeitsanschluss zum Tankanschluss geführt werden kann.

Das Zwischenelement umgreift vorzugsweise den Regelkolben zumindest teilweise und/oder ist ringförmig, besonders bevorzugt ringscheibenförmig, ausgebildet. Am Regelkolben kann ein bevorzugt ringförmiger Kolbenanschlag und am Ventilgehäuse kann ein bevorzugt ringförmiger Gehäuseanschlag für das Zwischenelement ausgebildet sein.

Sobald die entsprechende Fluidmenge vom Arbeits- zum Tankanschluss rückgeführt ist, nimmt der Differenzdruck und entsprechend die wirksame Druckbeaufschlagung des Regelkolbens bis auf Null ab. Der Regelkolben befindet sich nunmehr in einem indifferenten Zustand, aus dem er beim erneuten Betätigen bzw. Einschalten der Betätigungseinrichtung, welche typischerweise als Elektromagnet ausgebildet ist, mit einer geringen Betätigungskraft zurück in die jeweils erste Lage, d.h., in Anlage mit dem Zwischenelement führbar ist. Sobald die Anlage, d.h., Berührung mit dem Zwischenelement und folglich mit der Rückstelleinrichtung erreicht ist, befindet sich die Betätigungseinrichtung, wie der Elektromagnet, im jeweiligen linearen Bereich und die entsprechende P-I-Kennlinie kann von Beginn an abgefahren werden, wodurch jedwede sprungartige Unregelmäßigkeit bedingt durch die Kupplungseinrichtung beim Anfahren einer Arbeitsmaschine bzw. eines Fahrzeugs vermeidbar ist. Im Ergebnis ist erfindungsgemäß der Einsatz eines preisgünstigeren Magneten mit geringerem linearen Hubbereich ohne Einschränkung möglich, sofern eine zusätzliche Bewegung des Regelkolbens von der ersten in zumindest eine weitere dritte Stellung mittels Fluiddruck, genauer dem benötigten Differenzdruck, ermöglicht ist.

Die Erfindung umfasst weiter eine Ventilanordnung mit einem erfindungsgemäßen Proportional-Druckregelventil und einem an den Arbeitsanschluss des Proportional-Druckregelventils angeschlossenen hydraulischen Verbraucher, wie eine Kupplung.

Weitere Vorteile und Merkmale der Erfindung ergeben sich aus den Figuren und der nachfolgenden Beschreibung der Zeichnung. Die vorstehend genannten und die weiter angeführten Merkmale können erfindungsgemäß jeweils einzeln oder in beliebigen Kombinationen miteinander verwirklicht sein. Die in den Figuren gezeigten Merkmale sind rein schematisch und nicht maßstäblich zu verstehen. Es zeigen:
- Fig. 1: einen Teilschnitt durch ein erfindungsgemäßes Proportional-Druckregelventil;
- Fig. 2: einen vergrößerten Ausschnitt aus Fig. 1; und
- Fig. 3: eine P-I-Kennlinie für ein erfindungsgemäßes Proportional-Druckregelventil im Vergleich zu einer herkömmlichen Lösung.

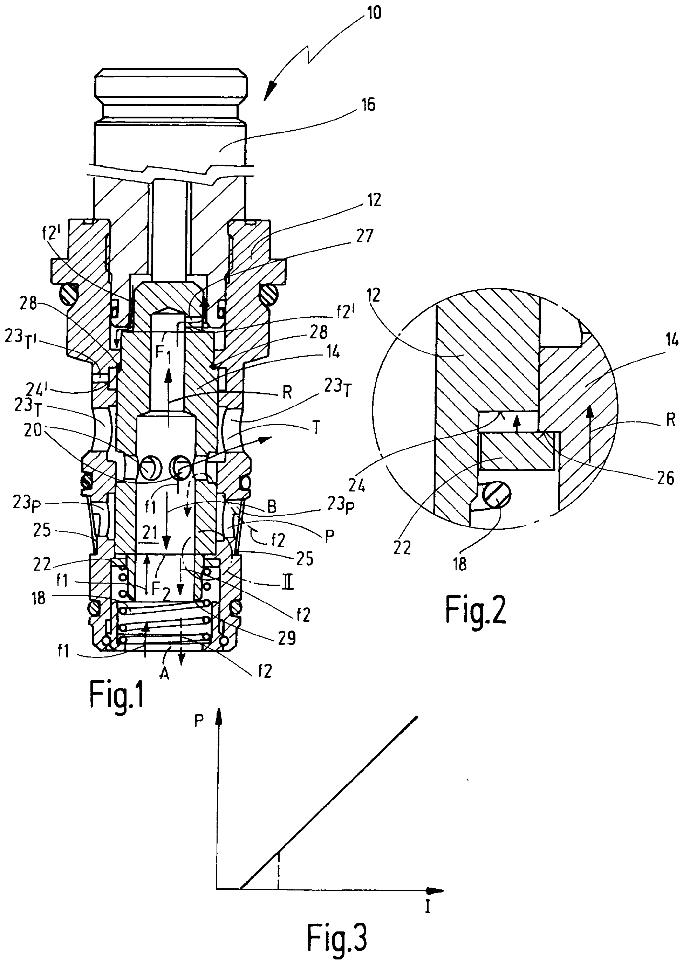

Fig. 1 zeigt in einem Teilschnitt ein längliches, im Großen und Ganzen zylinderförmiges Proportional-Druckregelventil 10, welches ein Ventilgehäuse 12, einen im Ventilgehäuse 12 linear verfahrbaren Regelkolben 14 und drei Fluidanschlüsse, einen als Tankanschluss T ausgebildeten ersten Fluidanschluss, einen als Versorgungsanschluss P ausgebildeten zweiten Fluidanschluss und einen als Arbeitsanschluss A ausgebildeten dritten Fluidanschluss, aufweist. Eine Betätigungsbewegung B des Regelkolbens 14 wird durch eine Betätigungseinrichtung 16, welche einen bestrombaren Elektromagneten umfasst, bewirkt. Bei der Betätigungsbewegung B wird eine als Druckfeder ausgebildete Rückstelleinrichtung 18 am der Betätigungseinrichtung 16 gegenüberliegenden, dem Arbeitsanschluss A zugeordneten Ende des Ventilgehäuses 12 zumindest teilweise komprimiert, anders ausgedrückt muss für eine Betätigungsbewegung B des Regelkolbens 14 eine von der Rückstelleinrichtung 18 aufgebrachte Rückstellkraft überwunden werden. Wird die am Regelkolben 14 angreifende Betätigungseinrichtung 16 nicht mehr betätigt, beispielsweise der Elektromagnet nicht mehr bestromt, wird der Regelkolben 14 entsprechend einer Rückstellbewegung R, welche durch die Rückstell-einrichtung 18 bewirkt und der Betätigungsbewegung B entgegengesetzt ist, zurück in seine ursprüngliche Lage geführt.

In Abhängigkeit von der Lage, anders ausgedrückt Stellung oder Position, des Regelkolbens 14 im Ventilgehäuse 12 wird eine erste Fluidverbindung f1 vom Arbeitsanschluss A zum Tankanschluss T oder eine zweite Fluidverbindung f2 vom Versorgungsanschluss P zum Arbeitsanschluss A zumindest teilweise freigegeben oder verschlossen. Hierfür sind Fluiddurchlässe 20 in einem Längenabschnitt des hohlkammerartigen Regelkolbens 14 vorgesehen, welche entsprechend der Lage des Regelkolbens 14 die jeweilige Fluidverbindung f1, f2 freigeben. Vom Arbeitsanschluss A führt die erste Fluidverbindung f1 durch einen Innenraum 21 des Regelkolbens 14 und die Fluiddurchlässe 20 hindurch zum mindestens einen Durchlass 23_{T} im Ventilgehäuse 12 umfassenden Tankanschluss T. Der zweite Fluidweg f2 führt vom mindestens einen Durchlass 23_{P} im Ventilgehäuse 12 umfassenden Versorgungsanschluss P durch die Fluiddurchlässe 20 und den Innenraum 21 des Regelkolbens 14 hindurch zum Arbeitsanschluss A, sofern der Regelkolben 14 in Blickrichtung auf die Fig. 1 gesehen durch eine Verfahrbewegung nach unten entgegen der Wirkung der Druckfeder 18 verfährt, wobei insoweit dann der bisher bestehende Fluidweg f1 gemäß der Darstellung nach der Fig. 1 verschlossen wird.

Die Rückstelleinrichtung 18 greift nicht unmittelbar am Regelkolben 14, sondern an einem Zwischenelement 22 an, welches ringscheibenartig ausgebildet den Regelkolben 14 umgibt bzw. umgreift und sich synchron mit diesem bewegen kann. Zur Übertragung der Rückstellkraft vom Zwischenelement 22 auf den Regelkolben 14 ist, wie in Fig. 2 vergrößert im Größenverhältnis 10:1 dargestellt, am Regelkolben 14 ein Kolbenanschlag 26 vorgesehen. Der Kolbenanschlag 26 ist wie ein vergleichbarer Gehäuseanschlag 24 am Ventilgehäuse 12 ringflächenartig ausgebildet. In Fig. 2 ist mit einem Pfeil angedeutet, dass die Rückstelleinrichtung 18 eine entsprechende Bewegung des Zwischenelements 22 bewirkt, und dass durch Anlage des Zwischenelements 22 am Kolbenanschlag 26 mittelbar die Rückstellbewegung R des Regelkolbens 14 bewirkt wird.

In der in Fig. 2 gezeigten Anordnung befindet sich der Regelkolben 14 über einer seinen zweiten möglichen Stellungen, in welchen dieser in einer durch die Betätigungseinrichtung 16 bewirkten Betätigungsbewegung B geführt worden ist. Entsprechend der in Fig. 2 gezeigten Beabstandung des Zwischenelements 22 vom Gehäuseanschlag 24 ist die zweite Fluidverbindung f2, in Fig. 1 gestrichelt eingezeichnet, vom Versorgungsanschluss P zum Arbeitsanschluss A zumindest teilweise freigegeben. Die zweite Stellung entspricht dem Füllen eines an den Arbeitsanschluss A angeschlossenen hydraulischen Verbrauchers mit Fluid vom Versorgungsanschluss P. Am dem Arbeitsanschluss A gegenüberliegenden Ende des Regelkolbens 14 ist eine in radialer Richtung vom Innenraum 21 abgehende Bohrung 27 im Regelkolben 14 ausgebildet. Weiter ist ein dem Tankanschluss T zugeordneter weiterer Durchlass 23_{T}' im Ventilgehäuse 12 ausgebildet. Eine weitere zweite Fluidverbindung f2' führt in der in Fig. 1 gezeigten Stellung vom Arbeitsanschluss A durch den Innenraum 21 und die Bohrung 27 des Regelkolbens 14 auf dessen Rückseite und gelangt dabei zu einer durch Stufung im Regelkolben gebildete Kreisringfläche 28, die eine Leckageverbindung mit dem Tankdruck an der Stelle 23_{T}' ermöglicht und im Übrigen einen Anschlag für die obere Regelposition des Regelkolbens 14 ausbildet, indem die Kreisringfläche 28 mit einem entsprechenden Vorsprung auf der Innenseite des Ventilgehäuses 12 in diesem Bereich zusammenwirkt. Durch den vorstehend beschriebenen Fluidweg wird der Fluiddruck auf den rückseitigen Teil des Regelkolbens 14 gemeldet und durch die Fluidverbindung f2' zum Tankanschluss in Form des Durchlasses 23_{T}' lassen sich Leckageströme im Betrieb des schieberartig ausgebildeten Regelkolbens 14 zur Tankseite T hin abführen. Im Bereich der dem Versorgungsanschluss P zugeordneten Durchlässe 23_{P} können Siebelemente 25 angeordnet sein, welche etwaige Verunreinigungen aus dem über die zweite Fluidverbindung f2 in das Proportional-Druckregelventil 10 einströmenden Fluid von der Druckversorgungsseite P her zurückhalten.

Zur "Entladung" des hydraulischen Verbrauchers wird die Bestromung der als Elektromagnet ausgebildeten Betätigungseinrichtung 16 unterbrochen und der Regelkolben 14 entsprechend der Rückstellbewegung R aus der zweiten zurück in eine erste Stellung geführt. In dieser ersten Stellung des Regelkolbens 14 liegt das Zwischenelement 22 am Gehäuseanschlag 24 an und die erste Fluidverbindung f1 vom Arbeitsanschluss A zum Tankanschluss T ist wiederum freigegeben sowie die zweite Fluidverbindung f2 geschlossen. Bei der Rückstellbewegung R greift die Rückstelleinrichtung 18 über das Zwischenelement 22 am Kolbenanschlag 26 des Regelkolbens 14 entsprechend an.

Bei dem Proportional-Druckregelventil 10 ist eine einen Fluiddurchtritt zum Tankanschluss T bzw. die erste Fluidverbindung f1 vergrößernde, dritte Regelposition erfindungsgemäß dadurch realisiert, dass der beim Durchströmen des Proportional-Druckregelventils 10, genauer des Regelkolbens 14, vom Arbeitsanschluss A zum Tankanschluss T entstehende Differenzdruck mit auf dem Regelkolben 14 einwirkt. Die druckwirksame Fläche die zur Ansteuerung des Regelkolbens mit dient, ist gebildet aus der Differenz zwischen den Flächen F2 und F1 gemäß der Darstellung nach der Fig. 1, wobei die angesprochene Differenz der Größe der Sektor- oder Differenzfläche 28 entspricht. Die Fläche F2 entspricht dabei dem größten Außendurchmesser oder größten Querschnittsfläche des Regelkolbens 14 im Bereich seines freien stirnseitigen Endes, das in Anlage mit dem bereits genannten Zwischenelement 22 bringbar ist. Die weitere Fläche F1 ist die demgegenüber um die Differenzfläche 28 reduzierte Querschnittsfläche des Regelkolbens 14 in seinem rückwärtigen Bereich. Der entsprechende Differenz- bzw. Fluiddruck steht bei der Rückführung von Fluid vom Arbeitsanschluss A zurück zum Tankanschluss T zur Verfügung, beispielsweise beim Abschalten einer dem Proportional-Druckregelventil 10 zugeordneten Kupplung. Die jeweils dritte Lage oder Stellung des Regelkolbens 14 wird entsprechend der Hubvergrößerung als "Range-Extender" bezeichnet. In einer dritten Stellung des Proportional-Druckregelventils 10 wird ein vergrößerter Öffnungsquerschnitt für die erste Fluidverbindung f1 zum Entleeren eines an den Arbeitsanschluss A angeschlossenen hydraulischen Verbrauchers, beispielsweise beim Entlasten einer Kupplung, freigegeben. Auf diese Weise ist eine Schnellentladefunktion des hydraulischen Verbrauchers, beispielsweise eine schnelle Trennung der Kupplung, ermöglicht. Über einen weiteren Gehäuseanschlag 24', welcher ringflächenartig am Ventilgehäuse 12 ausgebildet ist, ist die maximale dritte Stellung für den Regelkolben 14, wie in Fig. 1 gezeigt, festgelegt.

Sobald die Entleerung bzw. Entladung vom Arbeitsanschluss A zum Tankanschluss T abgeschlossen ist, entfällt der Differenzdruck und somit die Krafteinwirkung auf die Kreisringfläche 29 am Regelkolben 14, welcher sich folglich in einem indifferenten Zustand befindet. Fig. 3 zeigt eine P-I-Kennlinie für das in den Fig. 1 und 2 gezeigte Proportional-Druckregelventil 10. Beim erneuten Betätigen der Betätigungseinrichtung 16, wie dem Bestromen des Elektromagneten, wird zunächst der Regelkolben 14 aus dem indifferenten Zustand zurück in die jeweils erste Stellung, anders ausgedrückt in Berührung mit dem Zwischenelement 22, geführt. Um den Regelkolben 14 wieder in Berührung bzw. Anlage mit dem als Ringscheibe ausgebildeten Zwischenelement 22 zu bewegen, reicht eine geringe Kraft der als Elektromagnet ausgebildeten Betätigungseinrichtung 16 aus. Sobald die Berührung mit dem Zwischenelement 22 und somit mit der als Federelement ausgebildeten Rückstelleinrichtung 18 erreicht ist, befindet sich die Betätigungseinrichtung 16 in ihrem linearen Bereich und die P-I-Kennlinie kann ohne Anfahrsprung, wie in Fig. 3 gestrichelt für bekannte Lösungen eingezeichnet, abgefahren werden. Der über die zweite Fluidverbindung f2 vom Versorgungsanschluss P zum Arbeitsanschluss A geführte Fluiddruck p steigt linear mit dem Betätigungsstrom I für die als Elektromagnet ausgebildete Betätigungseinrichtung 16 an.

## Patentansprüche

1. Proportional-Druckregelventil (10) zur Ansteuerung einer ersten Fluidverbindung (f1) von einem Arbeitsanschluss (A) zu einem Tankanschluss (T) und einer zweiten Fluidverbindung (f2) von einem Versorgungsanschluss (P) zum Arbeitsanschluss (A), umfassend:
- ein Ventilgehäuse (12) mit dem Arbeitsanschluss (A), dem Tankanschluss (T) und dem Versorgungsanschluss (P);
- einen im Ventilgehäuse (12) verfahrbar geführten Regelkolben (14), welcher in mindestens einer ersten Stellung die erste Fluidverbindung (f1) vom Arbeitsanschluss (A) zum Tankanschluss (T) freigibt und die zweite Fluidverbindung (f2) vom Versorgungsanschluss (P) zum Arbeitsanschluss (A) sperrt, und welcher in mindestens einer zweiten Stellung die erste Fluidverbindung (f1) sperrt und die zweite Fluidverbindung (f2) freigibt;
- eine den Regelkolben (14) in Richtung der jeweils ersten Stellung haltende Rückstelleinrichtung (18); und
- eine den Regelkolben (14) gegen die Rückstellkraft der Rückstelleinrichtung (18) in Richtung der jeweils zweiten Stellung verfahrende Betätigungseinrichtung (16),
wobei der Regelkolben (14) bei Freigabe der ersten Fluidverbindung (f1) durch den beim Durchströmen von Fluid entstehenden Gesamt-Differenzdruck aus der jeweils ersten Stellung in mindestens eine dritte Stellung verfahrbar ist, und
wobei in der jeweils dritten Stellung des Regelkolbens (14) die erste Fluidverbindung (f1) mit vergrößertem Öffnungsquerschnitt gegenüber der jeweils ersten Stellung freigegeben und die zweite Fluidverbindung (f2) weiter gesperrt bleibt,
wobei die Rückstelleinrichtung (18) über ein Zwischenelement (22) am Regelkolben (14) angreift und wobei das Zwischenelement (22) in der jeweils ersten Stellung des Regelkolbens (14) am Regelkolben (14) anliegt,
**dadurch gekennzeichnet, dass** der Regelkolben (14) in seiner dritten Stellung vom Zwischenelement (22) beabstandet ist.

2. Proportional-Druckregelventil nach Anspruch 1, **dadurch gekennzeichnet, dass** der Regelkolben (14) hohlkörperartig, vorzugsweise rohrzylinderförmig, mit einem Innenraum (21) ausgebildet ist und Fluiddurchlässe (20) für die jeweilige durch den Innenraum (21) führende Fluidverbindung (f1, f2) aufweist, dass im Ventilgehäuse (12) jeweils mindestens ein dem jeweiligen Anschluss (A, P, T) zugeordneter Durchlass (23P, 23T, 23T') ausgebildet ist, und dass die dem Versorgungsanschluss (P) und dem Tankanschluss (T) jeweils zugeordneten Fluiddurchlässe (23P, 23T) in Abhängigkeit von der Lage des Regelkolbens (14) im Ventilgehäuse (12) durch die entsprechenden Fluiddurchlässe (20) hindurch fluidführend mit dem Innenraum (21) verbunden oder fluidführend von diesem getrennt sind.

3. Proportional-Druckregelventil nach Anspruch 1 oder 2, **dadurch gekennzeichnet, dass** der dem Arbeitsanschluss (A) zugeordnete Fluiddurchlass im Regelkolben (14) und der entsprechende Durchlass im Ventilgehäuse (12) an einer Unterseite des Proportional-Druckregelventils (10) angeordnet sind.

4. Proportional-Druckregelventil nach einem der vorhergehenden Ansprüche, **dadurch gekennzeichnet, dass** bei einem Durchströmen des Regelkolbens (14) abhängig von dem an ihm anstehenden Fluiddruck ein Differenzdruck am Regelkolben (14) ansteht, der sich durch die unterschiedliche Flächenausbildung am gestuften Regelkolben (14) ergibt, wobei am Außenumfang des gestuften Regelkolbens (14) eine kreisringförmige Differenzdruckfläche (28) vorgesehen ist, deren Druckwirksamkeit sich aus der Differenz des größten Außenumfanges (F2) des Regelkolbens (14) im Bereich des Arbeitsanschlusses (A) zu einem mittleren Außenumfang (F1) im rückwärtigen Bereich des Regelkolbens (14) ergibt, der der Betätigungseinrichtung (16) zugewandt ist und dass die Differenzdruckfläche (28) zwischen diesen genannten Außenumfängen (F1, F2) als weitere Stufe des Regelkolbens (14) realisiert ist.

5. Proportional-Druckregelventil nacheinem der vorhergehenden Ansprüche, **dadurch gekennzeichnet, dass** das Zwischenelement (22) den Regelkolben (14) zumindest teilweise umgreift und/oder ringförmig, besonders bevorzugt ringscheibenförmig, ausgebildet ist.

6. Proportional-Druckregelventil nacheinem der vorhergehenden Ansprüche, **dadurch gekennzeichnet, dass** am Regelkolben (14) ein bevorzugt ringförmiger Kolbenanschlag (26) und am Ventilgehäuse (12) ein bevorzugt ringförmiger Gehäuseanschlag (24) für das Zwischenelement (22) ausgebildet sind.

7. Proportional-Druckregelventil nach einem der vorhergehenden Ansprüche, **dadurch gekennzeichnet, dass** die Rückstelleinrichtung (18) ein Federelement, insbesondere eine den Regelkolben (14) umgreifende Druckfeder, ist.

8. Proportional-Druckregelventil nach einem der vorhergehenden Ansprüche, **dadurch gekennzeichnet, dass** die Betätigungseinrichtung (16) einen Elektromagneten mit linearem Kraft-Hubbereich umfasst.

9. Ventilanordnung mit einem Proportional-Druckregelventil (10) nach einem der vorhergehenden Ansprüche und einem an den Arbeitsanschluss (A) des Proportional-Druckregelventils (10) angeschlossenen hydraulischen Verbraucher, wie eine Kupplung.

## Claims

1. A proportional pressure-regulating valve (10) for controlling a first fluid connection (f1) from a working connection (A) to a tank connection (T) and a second fluid connection (f2) from a supply connection (P) to the working connection (A), comprising:
- a valve housing (12) with a working connection (A), the tank connection (T) and the supply connection (P);
- a regulating piston (14) which can be guided displaceably in the valve housing (12), which piston opens the first fluid connection (f1) from the working connection (A) to the tank connection (T) and closes the second fluid connection (f2) from the supply connection (P) to the working connection (A) when in at least one first position, and which piston closes the first fluid connection (f1) and opens the second fluid connection (f2) when in at least one second position;
- a restoring device (18) holding the regulating piston (14) in direction of the respective first position; and
- an actuating device (16) displacing the regulating piston (14) against the restoring force of the restoring device (18) in direction of the respective second position,
wherein, when the first fluid connection (f1) is opened, the regulating piston (14) can be displaced from the respective first position to at least one third position by the total differential pressure produced when fluid flows through, and
wherein in the respective third position of the regulating piston (14), the first fluid connection (f1) is opened with an enlarged opening cross-section vis-à-vis the respective first position and the second fluid connection (f2) remains closed,
wherein the restoring device (18) engages the regulating piston (14) via an intermediate element (22), and wherein the intermediate element (22) abuts the regulating piston (14) in the respective first position of the regulating piston (14),
**characterised in that** the regulating piston (14) is spaced apart from the intermediate element (22) in one of its third positions.

2. The proportional pressure-regulating valve according to claim 1, **characterised in that** the regulating piston (14) is formed in the shape of a hollow body, preferably in the shape of a tube cylinder, with an internal space (21) and fluid passages (20) for the respective fluid connection (f1, f2) leading through the internal space (21), that in each case at least one passage (23P, 23T, 23T') associated with the respective connection (A, P, T) is formed in the valve housing (12), and that the fluid passages (23P, 23T) associated with the supply connection (P) and the tank connection (T), respectively, are fluidically connected to or fluidically separate from the internal space (21) through the corresponding fluid passages (20), depending on the state of the regulating piston (14) in the valve housing (12).

3. The proportional pressure-regulating valve according to claim 1 or 2, **characterised in that** the fluid passage in the regulating piston (14) associated with the working connection (A) and the corresponding passage in the valve housing (12) are arranged on an underside of the proportional pressure-regulating valve (10).

4. The proportional pressure-regulating valve according to one of the preceding claims, **characterised in that** when fluid flows through the regulating piston (14) depending on the fluid pressure present thereat, a differential pressure is present at the regulating piston (14) which results from the different surface formation on the graduated regulating piston (14), wherein an annular differential pressure surface (28) is provided on the outer circumference of the graduated regulating piston (14), the pressure effect of which surface results from the difference between the largest outer circumference (F2) of the regulating piston (14) in the region of the working connection (A) and an average outer circumference (F1) in the rear region of the regulating piston (14) facing the actuating device (16), and that the differential pressure surface (28) between these named outer circumferences (F1, F2) is implemented as an additional gradation of the regulating piston (14).

5. The proportional pressure-regulating valve according to one of the preceding claims, **characterised in that** the intermediate element (22) at least partially encompasses the regulating piston (14) and/or is formed annular, particularly preferably disk-shaped.

6. The proportional pressure-regulating valve according to one of the preceding claims, **characterised in that** a preferably annular piston stop (26) is formed on the regulating piston (14) and a preferably annular housing stop (24) for the intermediate element (22) is formed on the valve housing (12).

7. The proportional pressure-regulating valve according to one of the preceding claims, **characterised in that** the restoring device (18) is a spring element, in particular a compression spring encompassing the regulating piston (14).

8. The proportional pressure-regulating valve according to one of the preceding claims, **characterised in that** the actuating device (16) comprises an electromagnet with linear power stroke range.

9. A valve assembly with a proportional pressure-regulating valve (10) according to one of the preceding claims and a hydraulic consumer, such as a clutch, connected to the working connection (A) of the proportional pressure-regulating valve (10).

## Revendications

1. Soupape (10) de régulation de la pression proportionnelle pour commander une première liaison (f1) fluidique d'un raccord (A) de travail à un raccord (T) de réservoir et une deuxième liaison (f2) fluidique d'un raccord (P) d'alimentation au raccord (A) de travail, comprenant :
- un corps (12) de soupape, comprenant le raccord (A) de travail, le raccord (T) de réservoir et le raccord (P) d'alimentation ;
- un piston (14) de réglage, qui est guidé, avec possibilité de se déplacer, dans le corps (12) de la soupape, qui, dans au moins une première position, dégage la première liaison (f1) fluidique du raccord (A) de travail au raccord (T) de réservoir et obture la deuxième liaison (f2) fluidique du raccord (P) d'alimentation au raccord (A) de travail et qui, dans au moins une deuxième position, obture la première liaison (f1) fluidique et dégage la deuxième liaison (f2) fluidique ;
- un dispositif (18) de rappel maintenant le piston (14) de réglage en direction de la première position et
- un dispositif (16) d'actionnement déplaçant le piston (14) de réglage, à l'encontre de la force de rappel du dispositif (18) de rappel, en direction de la deuxième position,
dans laquelle le piston (14) de réglage, lorsque la première liaison (f1) fluidique est dégagée, peut, par la différence de pression totale créée par le passage de fluide, être déplacé de la première position dans au moins une troisième position et
dans laquelle, dans la troisième position du piston (14) de réglage, la première liaison (f1) fluidique est dégagée, en ayant une section transversale d'ouverture plus grande que dans la première position, et la deuxième liaison (f2) fluidique continue à être obturée,
dans laquelle le dispositif (18) de rappel attaque, par un élément (22) intermédiaire, le piston (14) de réglage et dans laquelle l'élément (22) intermédiaire s'applique au piston (14) de réglage dans la première position du piston (14) de réglage,
**caractérisée en ce que** le piston (14) de réglage est, dans sa troisième position, à distance de l'élément (22) intermédiaire.

2. Soupape de régulation de la pression proportionnelle suivant la revendication 1, **caractérisée en ce que** le piston (14) de réglage est constituée sous la forme d'un corps creux, de préférence sous la forme d'un cylindre creux, ayant un espace (21) intérieur, et a des passages (20) pour du fluide pour la liaison (f1, f2) fluidique passant dans l'espace (21) intérieur, **en ce que**, dans le corps (12) de la soupape, est constitué, au moins, un passage (23P, 23T, 23T') associé au raccord (A, P, T) respectif et **en ce que** les passages (23P, 23T) pour du fluide associés au raccord (P) d'alimentation et au raccord (T) de réservoir communiquent fluidiquement avec l'espace (21) intérieur en fonction de la position du piston (14) de réglage du corps (12) de la soupape, en passant par les passages (20) correspondants pour du fluide, ou sont séparés fluidiquement de cet espace (21) intérieur.

3. Soupape de régulation de la pression proportionnelle suivant la revendication 1 ou 2, **caractérisée en ce que** le passage pour du fluide associé au raccord (A) de travail dans le piston (14) de réglage et le passage correspondant dans le corps (12) de la soupape sont disposés sur un côté inférieur de la soupape (10) de la pression proportionnelle.

4. Soupape de régulation de la pression proportionnelle suivant l'une des revendications précédentes, **caractérisée en ce que**, si le piston (14) de réglage est traversé, il s'établit, en fonction de la pression du fluide qui s'y applique, une différence de pression sur le piston (14) de réglage, qui provient de la constitution différente de surface du piston (14) de réglage à palier, dans laquelle, sur le pourtour extérieur du piston de réglage à palier est prévue une surface (28) de pression différentielle en forme d'anneau de cercle, dont l'efficacité en pression provient de la différence du plus grand pourtour (f2) extérieur du piston (14) de réglage dans la région du raccord (A) de travail par rapport à un pourtour (f1) extérieur moyen dans la région vers l'arrière du piston (14) de réglage, qui est tournée vers le dispositif (16) d'actionnement, et **en ce que** la surface (28) de pression différentielle entre ces pourtours (21, 22) extérieurs mentionnés est réalisée sous la forme d'un autre palier du piston (14) de réglage.

5. Soupape de régulation de la pression proportionnelle suivant l'une des revendications précédentes, **caractérisée en ce que** l'élément (22) intermédiaire entoure, au moins en partie, le piston (14) de réglage et/ou est constitué annulairement, de manière particulièrement préférée sous la forme d'un disque annulaire.

6. Soupape de régulation de la pression proportionnelle suivant l'une des revendications précédentes, **caractérisée en ce que**, sur le piston (14) de réglage, est constituée une butée (26) de piston, de préférence annulaire, et, sur le corps (12) de la soupape, une butée (24) de corps, de préférence annulaire, pour l'élément (22) intermédiaire.

7. Soupape de régulation de la pression proportionnelle suivant l'une des revendications précédentes, **caractérisée en ce que** le dispositif (18) de rappel est un élément à ressort, notamment un ressort de compression entourant le piston (14) de réglage.

8. Soupape de régulation de la pression proportionnelle suivant l'une des revendications précédentes, **caractérisée en ce que** le dispositif (16) d'actionnement comprend un domaine force-course linéaire.

9. Dispositif de soupape comprenant une soupape (10) de régulation de la pression proportionnelle suivant l'une des revendications précédentes et un consommateur hydraulique, comme un embrayage, raccordé au raccord (A) de travail de la soupape (10) de régulation de la pression proportionnelle.'
